# EUROPÄISCHE PATENTSCHRIFT

(11) **EP 3 305 054 B1**
(45) Veröffentlichungstag und Bekanntmachung des Hinweises auf die Patenterteilung: **03.07.2019**
(21) Anmeldenummer: 17401103.1
(22) Anmeldetag: 05.10.2017
(51) Int. Cl.: A01C 7/10, A01C 7/12

(54) **VOLUMETRISCH DOSIERENDE SÄMASCHINE UND VERFAHREN ZUR ERKENNUNG EINES NICHT ZUM SAATGUT PASSENDEN DOSIERWALZENTYPS**
VOLUMETRICALLY DOSABLE SOWING MACHINE AND METHOD FOR DETECTING A METERING ROLLER TYPE THAT DOES NOT SUIT THE SEED TYPE
SEMOIR À DOSAGE VOLUMÉTRIQUE ET PROCÉDÉ DE DÉTECTION D'UN TYPE DE ROULEAU DOSEUR NON APPROPRIÉ AUX SEMENCES

(30) Priorität: 10.10.2016 DE 102016119177
(43) Veröffentlichungstag der Anmeldung: 11.04.2018
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Bardroff, Alexander, 26127 Oldenburg (DE)

(56) Entgegenhaltungen:
- EP-A1- 2 055 168
- DE-A1- 10 350 542
- US-A1- 2015 059 626

## Beschreibung

Die Erfindung betrifft ein Verfahren zur Erkennung eines nicht zum Saatgut passenden Dosierwalzentyps sowie eine volumetrisch dosierende Sämaschine mit einer Dosiereinrichtung mit wechselbarer Dosierwalze, wobei in Kammern der Dosierwalze jeweils mehrere Körner eines Saatguts aus einem Vorratsbehälter aufgenommen und volumetrisch dosiert werden.

Mit derartigen Verfahren und Sämaschinen werden die Körner des Saatguts üblicherweise aus dem Vorratsbehälter mittels der Dosiereinrichtung volumetrisch dosiert und dann auf eine landwirtschaftliche Nutzfläche ausgesät. Dadurch können Pflanzensorten, wie beispielsweise Getreide auf der Nutzfläche gleichmäßig angesät werden.

Die Dosiereinrichtung umfasst dazu ein Dosiergehäuse und eine wechselbare Dosierwalze mit mehreren Kammern, durch die jeweils mehrere Körner des Saatguts aufgenommen und so volumetrisch dosiert werden. Da die Körner unterschiedlicher Pflanzentypen auch unterschiedlich groß sind und die Ausbringmengen, welche durch den angestrebten Pflanzabstand bestimmt ist, ebenfalls sehr unterschiedlich sind, werden entsprechend verschiedene Dosierwalzentypen benötigt, deren Kammern an die Körnergröße angepasst sind. Der Landwirt tauscht dann die Dosierwalze aufgrund einer Dosierwalzenempfehlung in der Betriebsanleitung aus und passt so den Dosierwalzentyp an das verwendete Saatgut und die gewünschte Ausbringmenge an.

DE 103 50 542 A1 offenbart eine Vorrichtung und das entsprechende Verfahren zur Auswertung von sensorisch gemessenen Daten der Körneranzahl bei einer Sämaschine. EP 2 055 168 A1 und US 2015/0059626 A1 offenbaren Sämaschinen bei denen mittels RFID-Elementen eine Streuscheibe bzw. projektspezifische Einstellparameter erkannt werden.

Nachteilig dabei ist, dass die Dosierwalzenempfehlung in der Betriebsanleitung nicht jedes denkbare Saatgut und Ausbringmenge erfassen kann und dass sie vom Landwirt auch nicht immer beachtet wird. Darüber hinaus bleibt die Arbeitsgeschwindigkeit in der Regel unberücksichtigt, die aber einen Einfluss auf die Auswahl des passenden Dosierwalzentyps haben kann. Folglich kann es also aufgrund eines unpassenden Dosierwalzentyps gelegentlich vorkommen, dass eine zu geringe oder schubweise Dosierung erfolgt, was zu einer sehr schlechten Kornverteilung in der Fahrtrichtung führt.

Aufgabenstellung der vorliegenden Erfindung ist es daher, ein Verfahren und eine volumetrisch dosierende Sämaschine bereitzustellen, mit der ein nicht zum Saatgut passender Dosierwalzentyp erkannt wird, um zu geringes oder schubweises Dosieren beim Säen zu verhindern.

Zur Lösung dieser Aufgabenstellung stellt die Erfindung ein Verfahren mit den Merkmalen des Anspruchs 1 bereit. Vorteilhafte Ausführungsformen sind in den Unteransprüchen genannt.

Dadurch, dass die dosierten Körner mit wenigstens einem Körnersensor erfasst und dessen Signale mit der Auswerteeinheit ausgewertet werden, kann eine zeitliche und/oder örtliche Anhäufung der Körner in einer Saatgutleitung bzw. bei der Ablage auf der landwirtschaftlichen Nutzfläche ermittelt werden. Aus der zeitlichen und/oder örtlichen Anhäufung der Körner kann dann der Gleichmäßigkeitswert in Richtung der Körneranhäufung und/oder -ausdünnung bestimmt werden. Weicht der so bestimmte Gleichmäßigkeitswert von dem Vorgabewert ab, so wird der Bedienperson oder der Steuerungseinrichtung der Sämaschine das Signal übermittelt, dass der Dosierwalzentyp nicht zum Saatgut passt. Dadurch ist es möglich, bei einer zu geringen oder zu schubweisen Dosierung eine unpassende Dosierwalze zu erkennen, so dass sie durch einen geeigneteren Dosierwalzentyp ausgetauscht werden kann.

Das Verfahren kann mit einer Sämaschine, vorzugsweise mit der in der Sämaschine verbundenen und/oder darin angeordneten Auswerteeinheit durchgeführt werden. Die Sämaschine kann als volumetrisch dosierende Sämaschine, vorzugsweise als mechanische oder pneumatische Sämaschine ausgebildet sein.

Die Sämaschine kann mehrere Säorgane umfassen, mit denen die dosierten Körner auf der landwirtschaftlichen Nutzfläche abgelegt werden. Ein Säorgan kann mit einem Säschar die Nutzfläche öffnen und/oder eine Säfurche formen, mit einem Ablagekanal die dosierten Körner aus der Saatgutleitung ablegen und/oder mit einer Rolle und/oder einem Striegel die Säfurche verschließen.

Die Körner des Saatguts können über ein Trichterelement aus dem Vorratsbehälter dem Dosiergehäuse und/oder der wechselbaren Dosierwalze zugeführt werden. Die wechselbare Dosierwalze kann in dem Dosiergehäuse drehbar angeordnet sein und vorzugsweise mit einem Antrieb gedreht werden. Die Kammern können an der wechselbare Dosierwalze umfänglich angeordnet sein, um die Körner zu dosieren. Die Kammern verschiedener Dosierwalzentypen können entsprechend verschieden lang oder tief an der Dosierwalze ausgebildet sein. Die Kammern können umfänglich an der Dosierwalze angeordnet sein. Alle Kammern eines Dosierwalzentyps können dieselbe Länge, Breite und/oder Tiefe aufweisen. Die Dosierwalze kann mit einem Antrieb um ihre Längsachse gedreht werden, vorzugsweise in unterschiedlichen Geschwindigkeitsstufen, um die Korndichte auf der Nutzfläche und/oder die Arbeitsgeschwindigkeit der Sämaschine zu verändern. Vorzugsweise kann die Dosierwalze zum Wechsel mit dem Antrieb lösbar verbunden sein.

Der Dosierwalze und/oder dem Dosiergehäuse kann eine Düse mit einem Gebläse nachgeordnet sein, über das die dosierten Körner zu einer Saatgutleitung hin pneumatisch gefördert werden. Die Düse kann einen gegenüber dem Düseneingang und/oderausgang reduzierten Rohrquerschnitt mit einem Saatguteingang umfassen, in den die dosierten Körner von der Dosierwalze her eingebracht werden. Dadurch wird ein Unterdruck im Bereich des Saatguteingangs erzeugt, mit dem die dosierten Körner in den Förderluftstrom hineingesaugt werden (Venturi-Effekt). Der Düseneingang kann mit dem Gebläse und der Düsenausgang mit der Saatgutleitung und/oder einem Verteilersystem verbunden sein.

Mit der Dosierwalze können die Körner in die Düse und/oder eine Saatgutleitung dosiert werden, die vorzugsweise mit einem Verteilersystem verbunden ist. Von dem Verteilersystem können die dosierten Körner auf weitere Saatgutleitungen verteilt werden, die jeweils davon ausgehend mit einem Säorgan verbunden sind. Das Verteilersystem kann beispielsweise ein Prallkopf sein. Die Saatgutleitungen können dazu vorgesehen sein, die dosierten Körner von der Dosierwalze und/oder der Verteilereinrichtung zu den Säorganen zu fördern. Vorzugsweise kann die Saatgutleitung als Rohr oder Schlauch ausgebildet sein.

Der Körnersensor kann in der Saatgutleitung, vorzugsweise im Verteilersystem angeordnet sein. Denkbar ist jedoch auch, dass der Körnersensor ein Ablageergebnis auf der landwirtschaftlichen Nutzfläche erfasst und vorzugsweise am Säschar angeordnet ist. Der Körnersensor kann über eine Signal- oder Datenleitung mit der Auswerteeinheit verbunden sein, um die Signale weiterzuleiten.

Eine Steuerungseinheit für die Sämaschine kann die Auswerteeinheit umfassen. Die Steuerungseinheit kann mit einer Bedieneinheit über einen Bildschirm und eine Tastatur bedient werden. Die Auswerteeinheit kann die Signale des Körnersensors mit einer Signal- und/oder Bildverarbeitung auswerten, um den Gleichmäßigkeitswert zu bestimmen. Die Auswerteeinheit kann dazu ausgebildet sein, mehrere der Gleichmäßigkeitswerte über einen Zeitraum zu speichern und auszuwerten. Beispielsweise können Abweichungen mehrerer Gleichmäßigkeitswerte um einen Mittelwert ausgewertet werden, beispielsweise mittels einer Standardabweichung.

Dass der Gleichmäßigkeitswert der Dosierung in Richtung einer Körneranhäufung und/oder -ausdünnung bestimmt wird, kann hier bedeuten, dass der Gleichmäßigkeitswert ein Maß dafür ist, ob die dosierten Körner regelmäßige örtliche und/oder zeitliche Abstände zueinander haben und/oder keine Anhäufungs- und/oder Fehlstellen bei der Körnerablage vorhanden sind. Denkbar ist, dass örtliche und/oder zeitliche Abstände in den Signalen des Körnersensors mit der Auswerteeinheit ausgewertet werden, um den Gleichmäßigkeitswert zu bestimmen. Beispielsweise kann der Gleichmäßigkeitswert eine Standardabweichung von einem Mittelwert der örtlichen und/oder zeitlichen Anhäufung der Körner sein. Beispielsweise kann der Körnersensor Zählimpulse als Signale abgeben, deren zeitliche Abstände mit der Auswerteeinheit ausgewertet werden. Ebenso ist denkbar, dass der Körnersensor Signale abgibt, die dem örtlichen Abstand von zwei oder noch mehr Körnern entspricht. Denkbar ist auch, dass der Körnersensor Signale abgibt, die dem örtlichen oder zeitlichen Abstand von Körnergruppen entspricht. Eine Körnergruppe kann wenigstens zwei oder noch mehr Körner umfassen.

Der Vorgabewert kann ein typischer Gleichmäßigkeitswert sein, der in der Auswerteeinheit hinterlegt ist. Beispielsweise kann der Vorgabewert experimentell ermittelt werden, indem ein für den jeweiligen Dosierwalzentyp geeignetes Saatgut mit der Sämaschine verarbeitet wird und der Gleichmäßigkeitswert ermittelt wird. Denkbar ist auch, dass der Vorgabewert über Berechnungen ermittelt wird. Darüber hinaus ist denkbar, dass der Vorgabewert dosierwalzenabhängig ist und/oder von der Drehzahl der Dosierwalze abhängt und/oder als Kennlinie in Abhängigkeit von wenigstens einem Betriebsparameter der Sämaschine in der Auswerteeinheit hinterlegt ist.

"Bei einer Abweichung" kann hier bedeuten, dass der Gleichmäßigkeitswert über einen Schwellwert hinaus von dem Vorgabewert abweicht.

Das Signal kann der Bedienperson auf einer Bedieneinheit der Steuerungseinheit angezeigt werden. Denkbar ist auch, dass das Signal mit einer LED oder dergleichen der Bedienperson angezeigt wird. Ferner kann das Signal an die Steuerungseinheit übermittelt werden, um automatisierte Aktionen durchzuführen, beispielsweise einen Stopp der Sämaschine oder der Saatgutzufuhr. Falls ein nicht zum Saatgut passender Dosierwalzentyp angezeigt wird, kann die Dosierwalze gegen eine Dosierwalze passenden Typs ausgetauscht werden, insbesondere durch die Bedienperson.

Die dosierten Körner können mit dem Körnersensor in einer Saatgutleitung erfasst werden. Dadurch ist der Körnersensor besonders einfach aufgebaut. Dazu kann der Körnersensor an der Saatgutleitung oder an dem Ablagekanal angeordnet sein. Der Ablagekanal kann das Ende der Saatgutleitung unmittelbar vor Ablage der Körner auf der Nutzfläche sein. Denkbar ist, dass die Körner beispielsweise über ein Anprallen an einer Prallfläche mit einem Impuls- oder Schwingungssensor, vorzugsweise einem Piezosensor einzeln erfasst werden. Ebenso ist denkbar, dass die dosierten Körner mit einer Lichtschranke in der Saatgutleitung erfasst werden.

Zeitliche und/oder örtliche Anhäufungen der Körner können in der Saatgutleitung ermittelt und daraus der Gleichmäßigkeitswert bestimmt werden. Beispielsweise können ein Mittelwert und die Standardabweichung der zeitlichen und/oder örtlichen Anhäufung bestimmt werden. Die Standardabweichung kann dann ein Maß für die Gleichmäßigkeit sein.

Die dosierten Körner können auf einer landwirtschaftlichen Nutzfläche, vorzugsweise in einer Säfurche abgelegt werden, wobei der Körnersensor die abgelegten Körner erfasst. Dadurch kann das Ablageergebnis zur Bildung des Gleichmäßigkeitswerts erfasst werden und daraufhin der richtige Dosierwalzentyp eingesetzt werden. Folglich ist das Ablageergebnis besonders genau. Vorzugsweise kann eine örtliche Anhäufung der abgelegten Körner ermittelt und daraus der Gleichmäßigkeitswert bestimmt werden. Denkbar ist, dass die abgelegten Körner in einem Bereich mit dem Körnersensor erfasst werden, in dem sie bereits ausgerollt sind.

Vorzugsweise können die Körner mit dem Körnersensor optisch erfasst werden. Dadurch ist die Erfassung besonders genau und flexibel. Die Körner können dabei mit einer Zeilen- oder Flächenkamera oder mit einer oder mehreren, insbesondere nebeneinander angeordneten, Lichtschranken erfasst werden. Denkbar ist, dass die auf der landwirtschaftlichen Nutzfläche bzw. in der Säfurche abgelegten Körner mit einer Kamera erfasst werden. Zudem können die Körner mit mehreren Kameras erfasst werden, um eine 3D-Position der Körner zu ermitteln. Dadurch können mehrere sich in einem Kamerabild überlagernde Körner besser getrennt werden.

Eine Anhäufung der Körner kann über eine Bildverarbeitung in der Auswerteeinheit erkannt werden. Vorzugsweise ist die Zeilen- oder Flächenkamera mit der Auswerteeinheit zur Bildverarbeitung verbunden. Die Bildverarbeitung kann dazu ausgebildet sein, Kamerabilder auf Positionen und/oder Anhäufungen der Körner hin auszuwerten. Dadurch kann der Abstand zwischen zwei oder noch mehr Körnern bzw. Gruppen von Körnern ermittelt werden. Folglich kann eine schubweise Ablage der Körner besser erkannt werden. Ebenso ist denkbar, dass eine Sequenz von Kamerabildern und die Fahrtbewegung der Sämaschine beim Säen miteinander kombiniert werden, um die Sequenz auszuwerten und die Anhäufung der Körner in unterschiedlichen Kamerabildern zu bestimmen. Die Bilder einer Zeilenkamera können quer zur Ausrichtung der Zeile zu einem flächenhaften Bild zusammengesetzt werden.

Mit dem Körnersensor können Impulse der Körner auf einen Kraftaufnehmer erfasst werden, der vorzugsweise als Piezoelement ausgebildet ist. Dadurch können die Körner besonders einfach in der Saatgutleitung erfasst werden. Der Kraftaufnehmer kann in einem Biegungsbereich der Saatgutleitung oder im Verteilsystem angeordnet sein, wobei die Körner durch die Richtungsänderung im Biegungsbereich auf den Kraftsensor gelenkt werden. Der Kraftsensor kann eine Prallfläche zum Aufprallen der Körner in der Saatgutleitung oder im Verteilsystem umfassen.

In einer Datenbank können mehrere Dosierwalzentypen und jeweils zugeordnete dosierwalzenabhängige Vorgabewerte abgelegt werden, wobei die Auswerteeinheit aus der Datenbank in Abhängigkeit des in der Sämaschine eingesetzten Dosierwalzentyps den entsprechenden Vorgabewert ausliest. Dadurch kann die Auswerteeinheit besonders einfach auf die unterschiedlichen Vorgabewerte zugreifen. Denkbar ist auch, dass die dosierwalzenabhängigen Vorgabewerte als Kennlinien in der Datenbank abgelegt sind, die von wenigstens einem Betriebsparameter der Sämaschine abhängen. Der wenigstens eine Betriebsparameter kann eine Drehzahl der Dosierwalze, eine Geschwindigkeit der Sämaschine und/oder Bodentypen umfassen.

Darüber hinaus stellt die Erfindung zur Lösung der Aufgabenstellung eine volumetrisch dosierende Sämaschine mit den Merkmalen des Anspruchs 11 bereit. Vorteilhafte Ausführungsformen sind in den Unteransprüchen genannt.

Dadurch, dass der Körnersensor zur Erfassung der dosierten Körner und die Auswerteeinheit zur Auswertung der Signale des Körnersensors ausgebildet sind, kann eine zeitliche und/oder örtliche Anhäufung der Körner ermittelt werden. Aus der zeitlichen und/oder örtlichen Anhäufung der Körner kann dann der Gleichmäßigkeitswert in Richtung der Körneranhäufung und/oder -ausdünnung bestimmt werden. Dadurch, dass die Auswerteeinheit bei einer Abweichung des Gleichmäßigkeitswerts von dem Vorgabewert zur Übermittlung des Signals ausgebildet ist, mit dem ein nicht zum Saatgut passender Dosierwalzentyp anzeigbar ist, kann die Dosierwalze daraufhin gegen einen geeigneteren Dosierwalzentyp ersetzt werden.

Die volumetrisch dosierende Sämaschine kann die zuvor in Bezug auf das Verfahren beschriebenen Merkmale, vorzugsweise nach einem der Ansprüche 1 - 10 einzeln oder in beliebigen Kombination sinngemäß umfassen.

Das zuvor beschriebene Verfahren, vorzugsweise nach einem der Merkmale der Ansprüche 1 - 10 kann mit der volumetrisch dosierenden Sämaschine nach einem der Ansprüche 11 - 14 durchgeführt werden.

Die volumetrisch dosierende Sämaschine kann mit einem Ackerschlepper verbunden sein, um beim Bearbeiten der landwirtschaftlichen Nutzfläche gezogen zu werden. Die volumetrisch dosierende Sämaschine kann eine pneumatische oder mechanische Sämaschine sein. Vorzugsweise kann die Sämaschine über eine Zugdeichsel mit dem Ackerschlepper verbunden sein. Die Sämaschine kann einen Tragrahmen für den Vorratsbehälter, eine Saatgutleitung, die Dosiereinrichtung, ein Verteilsystem, ein oder mehrere Säorgane und/oder die Überwachungseinrichtung umfassen. Der Tragrahmen kann vorzugsweise mit einem Fahrwerk auf der landwirtschaftlichen Nutzfläche abgestützt sein.

Der Körnersensor kann an einer Saatgutleitung angegliedert sein, um die dosierten Körner in der Saatgutleitung zu erfassen. Dadurch kann der Körnersensor besonders einfach aufgebaut sein. Denkbar ist hier, dass der Körnersensor als Impuls-, Kraft- oder Schwingungssensor, vorzugsweise als Piezosensor, oder als Lichtschranke ausgebildet ist.

Der Körnersensor kann als Zeilen- oder Flächenkamera ausgebildet sein, die derart an der landwirtschaftlichen Sämaschine angeordnet ist, dass sie einen Ablagebereich für die dosierten Körner auf der landwirtschaftlichen Nutzfläche erfasst, um die darauf von der Sämaschine abgelegten Körner als Kamerabilder aufzunehmen. Dadurch kann das tatsächliche Ablageergebnis auf der Nutzfläche für die Bestimmung des nicht passenden Dosierwalzentyps herangezogen werden. Folglich kann die Überwachung des Dosierwalzentyps noch genauer arbeiten. Die Zeilen- und/oder Flächenkamera kann ein Objektiv, einen CCD- oder CMOS-Sensor und/oder eine Bilddatenschnittstelle zur Übermittlung von Bildsignalen umfassen.

Die Auswerteieinheit kann mit einer Datenbank verbunden sein, in der mehrere Dosierwalzentypen und jeweils zugeordnete dosierwalzenabhängige Vorgabewerte abgelegt sind. Dadurch kann die Auswerteeinheit besonders einfach auf die Vorgabewerte zugreifen. Die Datenbank kann in einer Speichereinheit abgelegt sein, die in der Auswerteeinheit integriert ist und/oder die mit der Auswerteeinheit verbunden ist.

Weitere Merkmale und Vorteile der Erfindung werden nachfolgend anhand der in den Figuren dargestellten Ausführungsbeispiele näher erläutert. Dabei zeigt:

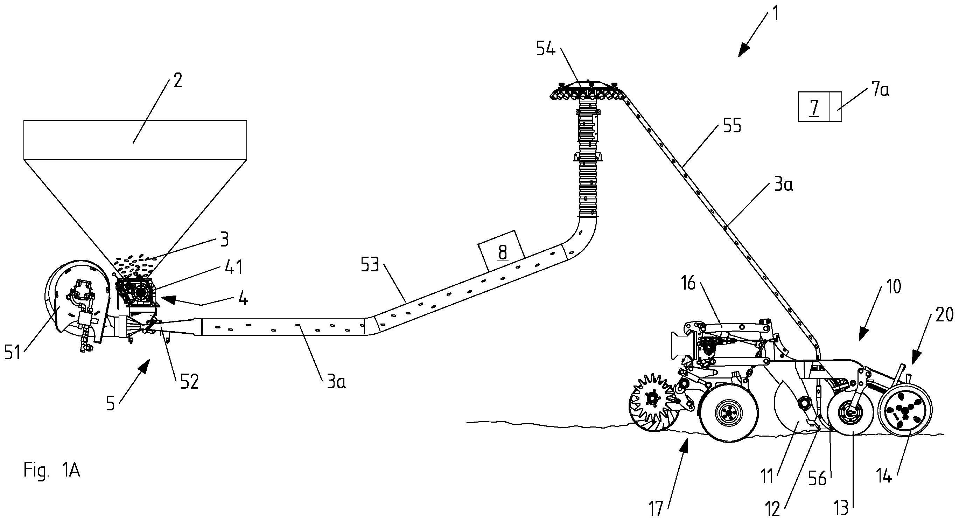

- Figur 1A: ein Ausführungsbeispiel einer volumetrisch dosierenden Sämaschine mit einem an der Saatgutleitung angegliederten Körnersensor in einer seitlichen Ansicht;
- Figur 1: B eine Detailansicht der Dosiereinrichtung der Figur 1A bei ordnungsgemäßer Dosierung der Körner.
- Figur 1C: eine Detailansicht der Dosiereinrichtung der Figur 1A bei schubweiser Dosierung der Körner.
- Figur 2: ein weiteres Ausführungsbeispiel einer volumetrisch dosierenden Sämaschine mit einer Kamera als Körnersensor zur Erfassung des Ablagebereichs der dosierten Körner auf der landwirtschaftlichen Nutzfläche in einer seitlichen Ansicht;
- Figur 3: ein Ausführungsbeispiel eines Verfahrens zur Erkennung eines nicht zum Saatgut passenden Dosierwalzentyps.

In der Figur 1A ist ein Ausführungsbeispiel einer volumetrisch dosierenden Sämaschine 1 mit einem an der Saatgutleitung 53 angegliederten Körnersensor 8 in einer seitlichen Ansicht dargestellt. Zu sehen ist der Vorratsbehälter 2 mit dem Saatgut 3, das über einen trichterförmigen Fortsatz der Dosiereinrichtung 4 zugeführt wird.

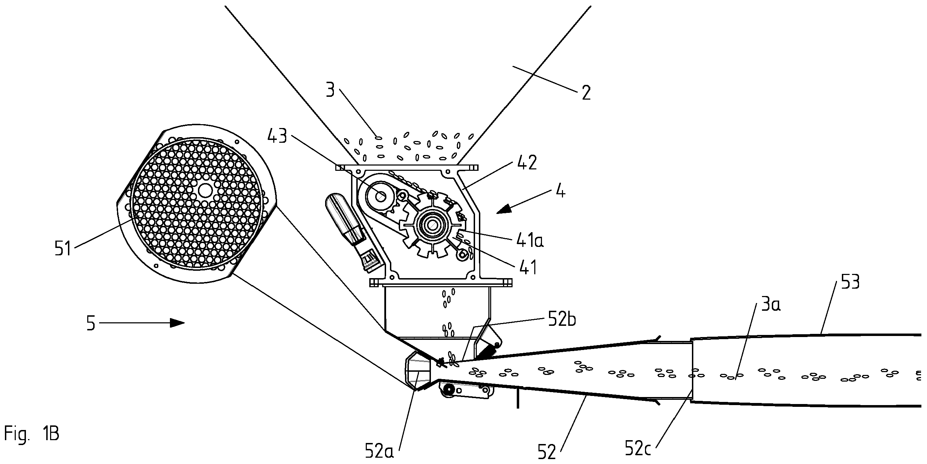

Der Aufbau der Dosiereinrichtung 4 ist in der Figur 1B im Detail dargestellt und umfasst das Dosiergehäuse 42, die wechselbare Dosierwalze 41 und den Dosierwalzenantrieb 43. Die Dosierwalze 41 ist trommelförmig ausgebildet und weist umfängliche Kammern 41a zur Aufnahme und zum volumetrischen Dosieren mehrerer Körner 3a auf. Anders ausgedrückt nehmen die Kammern 41a durch ihre Volumina jeweils eine bestimmte Anzahl von Körnern 3a auf. Die Dosierwalze 41 ist über eine lösbare Verbindung mit dem Antrieb 43 verbunden und dreht sich um ihre Längsachse, so dass die Körner 3a zur Fördereinrichtung 5 für das Saatgut gefördert und dosiert werden. Die dosierten Körner 3a werden von der Dosiereinrichtung 4 in den Saatguteingang 52b der Düse 52 abgegeben.

Durch das Gebläse 51 wird Luft zum Eingang 52a der Düse 52 gepumpt. Dort entsteht durch die Verengung am Saatguteingang 52b ein Unterdruck (Venturi-Effekt), so dass das Saatgut 3a hineingesaugt und mit dem Luftstrom pneumatisch zum Ausgang 52c in die Saatgutleitung 53 gefördert wird.

Zu sehen ist in der Figur 1B auch, dass die Körner 3a bei ordnungsgemäßen Betrieb in der Saatgutleitung 53 im Wesentlichen gleichmäßig beabstandet gefördert werden.

In der Figur 1A ist weiter zu sehen, dass die dosierten Körner 3a in der Saatgutleitung 53 zu dem Verteilsystem 54 gefördert werden, das hier als Prallkopf ausgebildet ist. Dort werden die Körner 3a auf mehrere Saatgutleitung 55 verteilt und zu den Säorganen 10 gefördert. Von den Saatgutleitungen 55 und den Säorganen 10 ist hier jeweils nur eines exemplarisch dargestellt.

Weiter ist das Säorgan 10 mit dem Säschar 11 und dem Furchenformer 12 zu sehen. Dadurch wird in der landwirtschaftlichen Nutzfläche 20 eine Säfurche geöffnet und die Körner 3a mit dem Ablagekanal 56 darin abgelegt. Dort prallen die Körner 3a gegen die Fangrolle 13, so dass sie in der Säfurche nicht verrollen können. Ferner ist am Säorgan der Striegel 14 angeordnet, um die Säfurche mit den darin abgelegten Körnern 3a wieder zu verschließen.

Darüber hinaus ist zu sehen, dass das Säorgan 10 mit der Tiefeneinstellvorrichtung 16 an dem Fahrwerk 17 angegliedert ist. Über die Tiefeneinstellvorrichtung 16 kann die Arbeitstiefe der Säorgane 10 eingestellt werden.

Folglich werden die Körner 3a mit der Sämaschine 1 gleichmäßig beabstandet in der eingestellten Arbeitstief auf der landwirtschaftlichen Nutzfläche 20 ausgesät.

Ferner ist die Überwachungseinrichtung mit dem Körnersensor 8 und mit der Auswerteeinheit 7 zur Erkennung eines nicht zum Saatgut 3 passenden Dosierwalzentyps zu sehen. Der Körnersensor 8 ist beispielsweise als Kraftsensor (Piezoelement) oder als Lichtschranke ausgeführt und an der Saatgutleitung 53 angegliedert, um die Körner 3a in der Saatgutleitung 53 zu erfassen. Dabei wird pro Korn 3a als Signal ein Zählimpuls an die Auswerteeinheit 7 übermittelt. Der Körnersensor 8 kann alternativ oder zusätzlich auch an einem oder mehreren der zu den Säorganen 10 führenden Saatgutleitungen 55 angeordnet sein. Dies kann den Vorteil bieten, dass durch die Aufspaltung des Saatgutstromes an dem Prallkopf 54 eine einfachere und genauere Erfassung der Körner 3a an dieser Stelle möglich ist zu dem Säschar 11 geleiteten Körner 3a für jedes Säorgan 10 individuell erfasst werden können.

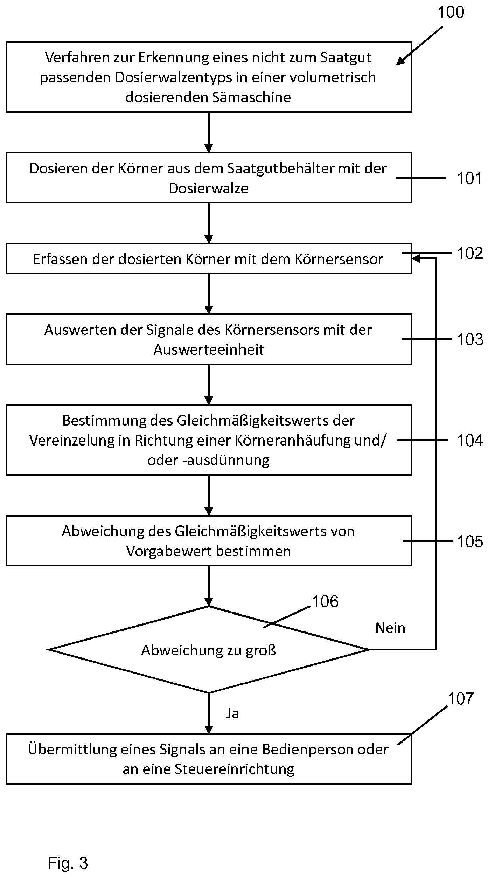

Die Auswerteeinheit 7 arbeitet nach dem weiter unten in Bezug auf die Figur 3 beschriebenen Verfahren 100 und ist zur Auswertung der Signale des Körnersensors 8 ausgebildet. Damit werden zunächst zeitliche Anhäufungen der Körner 3a in der Saatgutleitung 53 bestimmt, beispielsweise über eine einfache Zeitmessung zwischen den Zählimpulsen. Anschließend werden die zeitlichen Anhäufungen in der Auswerteeinheit 7 gemittelt und die Standardabweichung bestimmt, so dass die Gleichmäßigkeit der Dosierung in Richtung einer Körneranhäufung und -ausdünnung bekannt ist.

Zu sehen ist weiter eine Datenbank 7a, mit der die Auswerteeinheit 7 verbunden ist. In der Datenbank 7a ist für mehrere unterschiedliche Dosierwalzentypen jeweils ein dosierwalzenabhängiger Vorgabewert abgelegt. Der Vorgabewert wird von der Auswerteeinheit 7 aus der Datenbank 7a für den eingesetzten Dosierwalzentyp ausgelesen und mit der zuvor bestimmten Gleichmäßigkeit der Dosierung verglichen. Wird dabei eine Abweichung über einen vorher festgelegten Schwellwert hinaus festgestellt, so wird an die Bedienperson ein entsprechendes Signal übermittelt, das einen nicht zum Saatgut 3 passenden Dosierwalzentyp anzeigt. Die Bedienperson kann dann die Dosierwalze 41 gegen einen passenderen Typ wechseln.

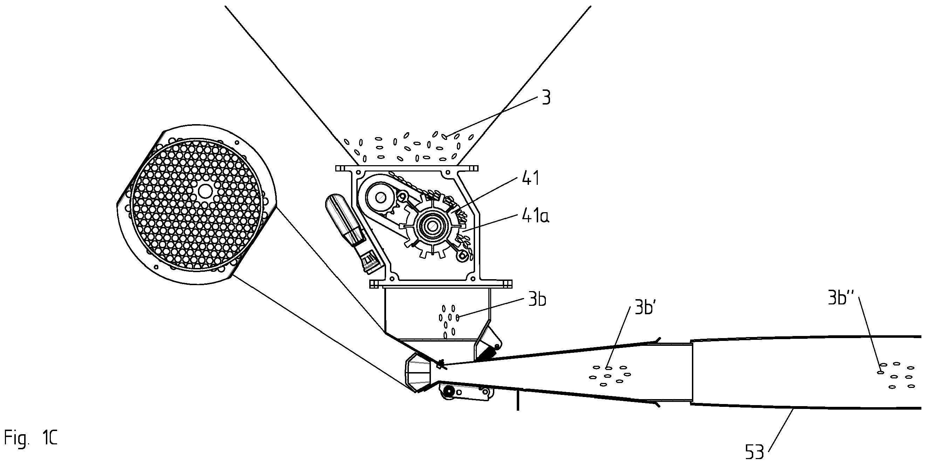

Diese Situation ist beispielsweise in der Figur 1C genauer zu sehen. Dort sind die Kammern 41a der Dosierwalze 41 für das eingesetzte Saatgut 3 zu groß. Um dennoch die gewünschte Dosierung zu gewährleisten, wird die Dosierwalze 41 entsprechend langsamer gedreht. Allerdings werden dadurch die Körner 3b aus den Kammern 41a schubweise abgegeben, Dadurch entstehen entsprechende Körneranhäufungen 3b' und 3b" in der Saatgutleitung 53. Folglich wird das Saatgut 3 auf der landwirtschaftlichen Nutzfläche 20 schubweise ausgesät, was unerwünscht ist. Die Körneranhäufungen 3b' und 3b" werden mit dem in der Figur 1A dargestellten Körnersensor 8 und der Auswerteeinheit 7 erkannt und der Bedienperson ein entsprechendes Signal angezeigt und vorzugsweise eine alternative Dosierwalze vorgeschlagen. Daraufhin wechselt die Bedienperson die Dosierwalze 41 gegen einen geeigneteren Typ aus.

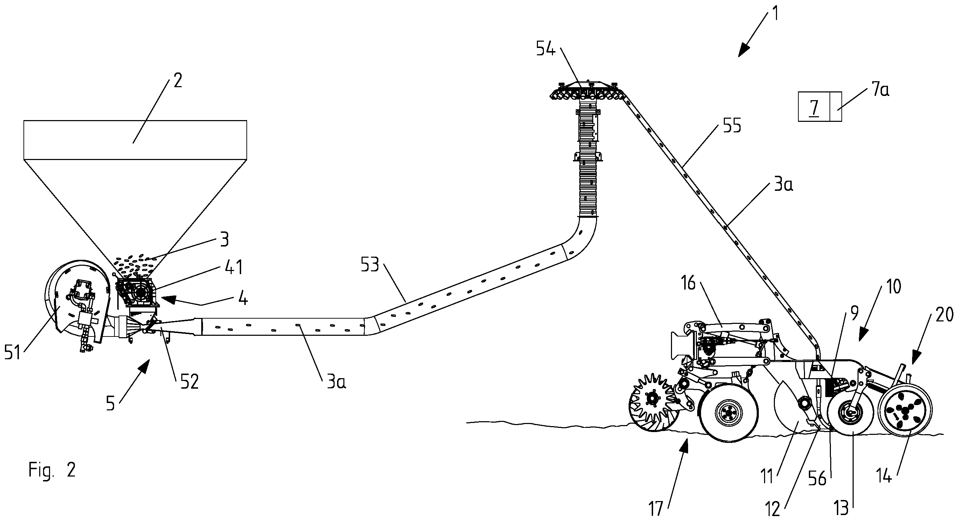

In der Figur 2 ist ein weiteres Ausführungsbeispiel der Sämaschine 1 mit einer Kamera als Körnersensor 9 zur Erfassung eines Ablagebereichs der Körner 3a auf der landwirtschaftlichen Nutzfläche 20 in einer seitlichen Ansicht dargestellt. Das Ausführungsbeispiel in der Figur 2 unterscheidet sich von der Figur 1A - 1C lediglich durch den Körnersensor 9 und das Auswerteverfahren in der Auswerteeinheit 7. Alle weiteren Merkmale und Ausführungen der Figuren 1A - 1C gelten entsprechend.

Der Körnersensor 9 ist hier als Flächenkamera ausgebildet, die derart an der landwirtschaftlichen Sämaschine 1 angeordnet ist, dass sie den Ablagebereich für die dosierten Körner 3a auf der landwirtschaftlichen Nutzfläche 20 erfasst, um die darauf von der Sämaschine 1 abgelegten Körner 3a als Kamerabilder aufzunehmen. Beispielsweise ist der Körnersensor 9 an dem Säorgan 10 angeordnet. Die Kamerabilder werden über eine nicht näher dargestellte Datenleitung an die Auswerteeinheit 7 übermittelt, die mittels Bildverarbeitung die Körner 3a in den Kamerabildern identifiziert und darüber deren Position im Ablagebereich bestimmt.

Die Auswerteeinheit 7 ist weiter dazu ausgebildet, die örtlichen Anhäufungen der Körner auf dem Ablagebereich zu ermitteln und daraus einen Mittelwert und die Standardabweichung zu bestimmen. Dies ist beispielsweise ein Maß für den Gleichmäßigkeitswert der Dosierung, der dann wiederum mit dem Vorgabewert verglichen wird.

Bei einer zu großen Abweichung des Gleichmäßigkeitswerts von einem Vorgabewert wird der Bedienperson ein entsprechendes Signal übermittelt, so dass sie die Dosierwalze 41 gegen einen geeigneteren Typ austauschen kann.

In der Figur 3 ist ein Ausführungsbeispiel eines Verfahrens 100 zur Erkennung eines nicht zum Saatgut 3 passenden Dosierwalzentyps in einem Flussdiagramm genauer dargestellt. Das Verfahren 100 kann mit den zuvor in Bezug auf die Figuren 1 A - C und 2 beschriebenen Sämaschinen 1 durchgeführt werden.

Zu sehen ist, dass bei dem Verfahren 100 zunächst die Körner 3a des Saatguts 3 aus dem Vorratsbehälter 2 mit der Dosierwalze 41 dosiert werden.

Anschließend werden im Schritt 102 die dosierten Körner 3a mit dem Körnersensor 8,9 erfasst und entsprechende Signale an die Auswerteeinheit 7 übermittelt. Wie zuvor genauer ausgeführt, können die Körner 3a entweder mit dem als Kraftsensor oder Lichtschranke ausgebildeten Körnersensor 8 in der Saatgutleitung 53 erfasst werden oder nach der Ablage auf der landwirtschaftlichen Nutzfläche 20 mit dem als Flächenkamera ausgebildeten Körnersensor 9. Die Körner 3a werden mit der Lichtschranke bzw. der Flächenkamera optisch erfasst.

In den nachfolgenden Schritten 103, 104 werden die Signale des Körnersensors 8,9 mit der Auswerteeinheit 7 ausgewertet und dabei die zeitlichen und/oder örtlichen Anhäufungen der Körner 3a bestimmt. Weiter werden die zeitlichen und/oder örtlichen Anhäufungen gemittelt und beispielsweise die Standardabweichung als Maß für die Gleichmäßigkeit der Dosierung in Richtung einer Körneranhäufung und/oder -ausdünnung bestimmt.

Weiter wird im Schritt 105 die Abweichung des Gleichmäßigkeitswerts von einem Vorgabewert bestimmt. Dazu sind optional in einer Datenbank 7a mehrere Dosierwalzentypen und jeweils zugeordnete dosierwalzenabhängige Vorgabewerte abgelegt, wobei die Auswerteeinheit 7 aus der Datenbank 7a in Abhängigkeit des in der Sämaschine 1 eingewechselten Dosierwalzentyps den entsprechenden Vorgabewerte ausliest.

Überschreitet die Abweichung im Schritt 106 einen Schwellwert, so wird an die Bedienperson oder an eine Steuereinrichtung der Sämaschine 1 ein entsprechendes Signal übermittelt. Anschließend kann die wechselbare Dosierwalze 41 gegen einen geeigneteren Typ gewechselt werden.

Folglich kann mit den volumetrisch dosierenden Sämaschinen 1 nach den Ausführungsbeispielen der Figuren 1 und 2 bzw. mit dem Verfahren 100 nach dem Ausführungsbeispiel der Figur 3 ein nicht zum Saatgut 3 passender Dosierwalzentyp besonders einfach erkannt werden, so dass die Dosierwalze 41 gegen einen geeigneteren Typ gewechselt werden kann. Dadurch wird zu geringes oder schubweises Dosieren beim Säen verhindert.

Es versteht sich, dass in den zuvor beschriebenen Ausführungsbeispielen genannte Merkmale nicht auf diese Kombinationen beschränkt sind, sondern auch einzeln oder in beliebigen anderen Kombinationen möglich sind.

## Patentansprüche

1. Verfahren (100) zur Erkennung eines nicht zum Saatgut (3) passenden Dosierwalzentyps in einer volumetrisch dosierenden Sämaschine (1), bei der sich eine wechselbare Dosierwalze (41) mit mehreren Kammern (41a) in einem Dosiergehäuse (42) dreht, wobei in den Kammern (41a) jeweils mehrere Körner (3a) des Saatguts (3) aus einem Vorratsbehälter (2) aufgenommen und volumetrisch dosiert werden (101),
wobei die dosierten Körner (3a) mit wenigstens einem Körnersensor (8, 9) erfasst werden (102),
**dadurch gekennzeichnet, dass** Signale des Körnersensors (8, 9) mit einer Auswerteeinheit (7) ausgewertet (103) und dabei ein Gleichmäßigkeitswert der Dosierung in Richtung einer Körneranhäufung und/oder-ausdünnung bestimmt wird (104), und
wobei einer Bedienperson oder Steuerungseinrichtung der Sämaschine (1) bei einer Abweichung des Gleichmäßigkeitswerts von einem Vorgabewert (105, 106) ein Signal übermittelt wird (107), das anzeigt, dass der eingesetzte Dosierwalzentyp nicht zum Saatgut (3) passt.

2. Verfahren (100) nach Anspruch 1, wobei die dosierten Körner (3a) mit dem Körnersensor (8) in einer Saatgutleitung (6) erfasst werden.

3. Verfahren (100) nach Anspruch 2, wobei in der Saatgutleitung (6) zeitliche und/oder örtliche Anhäufung der Körner (3a) ermittelt und daraus der Gleichmäßigkeitswert bestimmt wird.

4. Verfahren (100) nach Anspruch 1, wobei die dosierten Körner (3a) auf einer landwirtschaftlichen Nutzfläche (20), vorzugsweise in einer Säfurche abgelegt werden und der Körnersensor (9) die abgelegten Körner (3a) erfasst.

5. Verfahren (100) nach Anspruch 4, wobei eine örtliche Anhäufung der abgelegten Körner (3a) ermittelt und daraus der Gleichmäßigkeitswert bestimmt wird.

6. Verfahren (100) nach einem der vorangegangenen Ansprüche, wobei die Körner (3a) mit dem Körnersensor (8, 9) optisch erfasst werden.

7. Verfahren (100) nach Anspruch 6, wobei die Körner (3a) mit einer Zeilen- oder Flächenkamera (9) oder mit einer Lichtschranke (8) erfasst werden.

8. Verfahren (100) nach Anspruch 6 oder 7, wobei eine Anhäufung der Körner (3a) über eine Bildverarbeitung in der Auswerteeinheit (7) erkannt wird.

9. Verfahren (100) nach einem der Ansprüche 1 - 5, wobei mit dem Körnersensor (8) Impulse der Körner (3a) auf einen Kraftaufnehmer erfasst werden, der vorzugsweise als Piezoelement ausgebildet ist.

10. Verfahren (100) nach einem der vorangegangenen Ansprüche, wobei in einer Datenbank (7a) mehrere Dosierwalzentypen und jeweils zugeordnete dosierwalzenabhängige Vorgabewerte abgelegt sind, und wobei die Auswerteeinheit (7) aus der Datenbank (7a) in Abhängigkeit des in der Sämaschine (1) eingewechselten Dosierwalzentyps den entsprechenden Vorgabewerte ausliest.

11. Volumetrisch dosierende Sämaschine (1) mit
- einem Vorratsbehälter (2) für Saatgut (3)
- einer Dosiereinrichtung (4), die ein Dosiergehäuse (42) und eine wechselbare Dosierwalze (41) mit mehreren Kammern (41a) umfasst, um in den Kammern (41a) jeweils mehrere Körner (3a) des Saatguts (3) aus dem Vorratsbehälter (2) aufzunehmen und volumetrisch zu dosieren, und
- mit einer Überwachungseinrichtung zur Erkennung eines nicht zum Saatgut (3) passenden Dosierwalzentyps mit wenigstens einem Körnersensor (8, 9) und einer Auswerteeinheit (7),
wobei der Körnersensor (8, 9) zur Erfassung der dosierten Körner (3a) ausgebildet ist, **dadurch gekennzeichnet, dass** die Auswerteeinheit (7) zur Auswertung von Signalen des Körnersensors (8, 9) und dabei zur Bestimmung einer Gleichmäßigkeit der Dosierung in Richtung einer Körneranhäufung und/oder-ausdünnung ausgebildet ist, und wobei die Auswerteeinheit (7) bei einer Abweichung des Gleichmäßigkeitswerts von einem Vorgabewert zur Übermittlung eines Signals ausgebildet ist, mit dem ein nicht zum Saatgut (3) passender Dosierwalzentyp anzeigbar ist.

12. Volumetrisch dosierende Sämaschine (1) nach Anspruch 11, wobei der Körnersensor (8) an eine Saatgutleitung (6) angegliedert ist, um die dosierten Körner (3a) in der Saatgutleitung (6) zu erfassen.

13. Volumetrisch dosierende Sämaschine (1) nach Anspruch 12, wobei der Körnersensor (8, 9) als Zeilen- oder Flächenkamera (9) ausgebildet ist, die derart an der landwirtschaftlichen Sämaschine (1) angeordnet ist, dass sie einen Ablagebereich (A) für die dosierten Körner (3a) auf einer landwirtschaftlichen Nutzfläche (20) erfasst, um die darauf von der Sämaschine (1) abgelegten Körner (3a) als Kamerabilder aufzunehmen.

14. Volumetrisch dosierende Sämaschine (1) nach einem der Ansprüche 11 -13,
wobei die Auswerteeinheit (7) mit einer Datenbank (7a) verbunden ist, in der mehrere Dosierwalzentypen und jeweils zugeordnete dosierwalzenabhängige Vorgabewerte abgelegt sind.

## Claims

1. Method (100) for identifying a metering roller type which is not suitable for the seed material (3) in a volumetrically metering sowing machine (1), in which an exchangeable metering roller (41) having a plurality of chambers (41a) rotates in a metering housing (42), wherein a plurality of grains (3a) of the seed material (3) are received from a storage container (2) and volumetrically metered (101) in each of the chambers (41a), wherein the metered grains (3a) are detected using at least one grain sensor (8, 9), **characterized in that** signals of the grain sensor (8, 9) are evaluated (103) using an evaluation unit (7) and, in the process, a uniformity value for metering in the sense of accumulating and/or thinning-out the grains is determined (104), and wherein a signal, which indicates that the metering roller type used is not suitable for the seed material (3), is transmitted (107) to an operator or control device of the sowing machine (1) when there is a deviation in the uniformity value from a prespecified value (105, 106).

2. Method (100) according to Claim 1, wherein the metered grains (3a) are detected using the grain sensor (8) in a seed material line (6).

3. Method (100) according to Claim 2, wherein time-related and/or location-related accumulation of the grains (3a) is ascertained in the seed material line (6) and the uniformity value is determined therefrom.

4. Method (100) according to Claim 1, wherein the metered grains (3a) are deposited on a useful agricultural area (20), preferably in a sowing furrow, and the grain sensor (9) detects the deposited grains (3a).

5. Method (100) according to Claim 4, wherein a location-related accumulation of the deposited grains (3a) is ascertained and the uniformity value is determined therefrom.

6. Method (100) according to one of the preceding claims, wherein the grains (3a) are optically detected using the grain sensor (8, 9).

7. Method (100) according to Claim 6, wherein the grains (3a) are detected using a line scan or area scan camera (9) or using a light barrier (8).

8. Method (100) according to Claim 6 or 7, wherein an accumulation of the grains (3a) is identified by means of an image-processing operation in the evaluation unit (7).

9. Method (100) according to one of Claims 1-5, wherein pulses of the grains (3a) onto a force transducer are detected using the grain sensor (8), which force transducer is preferably designed as a piezo element.

10. Method (100) according to one of the preceding claims, wherein a plurality of metering roller types and respectively associated metering roller-dependent prespecified values are stored in a database (7a), and wherein the evaluation unit (7) reads out the corresponding prespecified values from the database (7a) depending on the metering roller type which is substituted into the sowing machine (1).

11. Volumetrically metering sowing machine (1) comprising
- a storage container (2) for seed material (3),
- a metering device (4), which comprises a metering housing (42) and an exchangeable metering roller (41) having a plurality of chambers (41a), in order to receive and to volumetrically meter a plurality of grains (3a) of the seed material (3) from the storage container (2) in each of the chambers (41a), and
- comprising a monitoring device for identifying a metering roller type which is not suitable for the seed material (3) using at least one grain sensor (8, 9) and an evaluation unit (7),
wherein the grain sensor (8, 9) is designed for detecting the metered grains (3a),
**characterized in that** the evaluation unit (7) is designed for evaluating signals of the grain sensor (8, 9) and, in the process, for determining a degree of uniformity of the metering operation in the sense of accumulating and/or thinning-out grains, and
wherein the evaluation unit (7) is designed to transmit a signal, with which a metering roller type which is not suitable for the seed material (3) can be indicated, when there is a deviation in the uniformity value from a prespecified value.

12. Volumetrically metering sowing machine (1) according to Claim 11, wherein the grain sensor (8) is attached to a seed material line (6) in order to detect the metered grains (3a) in the seed material line (6).

13. Volumetrically metering sowing machine (1) according to Claim 12, wherein the grain sensor (8, 9) is designed as a line scan or area scan camera (9) which is arranged on the agricultural sowing machine (1) in such a way that it detects a deposit region (A) for the metered grains (3a) on a useful agricultural area (20) in order to record the grains (3a) deposited thereon by the sowing machine (1) as camera images.

14. Volumetrically metering sowing machine (1) according to one of Claims 11-13, wherein the evaluation unit (7) is connected to a database (7a) in which a plurality of metering roller types and respectively associated metering roller-dependent prespecified values are stored.

## Revendications

1. Procédé (100) de détection d'un type de rouleau doseur non approprié aux semences (3) dans un semoir à dosage volumétrique (1), dans lequel un rouleau de dosage remplaçable (41) avec plusieurs chambres (41a) tourne dans un boîtier de dosage (42), à chaque fois plusieurs graines (3a) des semences (3) provenant d'un réservoir (2) étant reçues dans les chambres (41a) et étant soumises (101) à un dosage volumétrique,
les graines dosées (3a) étant détectées (102) au moyen d'au moins un détecteur de graines (8, 9), **caractérisé en ce que**
des signaux du détecteur de graines (8, 9) sont analysés (103) avec une unité d'analyse (7) et une valeur d'uniformité du dosage est ainsi déterminée (104) dans le sens d'une accumulation et/ou d'un éclaircissement de graines, et
un signal étant communiqué (107) à un opérateur ou à un dispositif de commande du semoir (1), en cas d'écart de la valeur d'uniformité par rapport à une valeur de consigne (105, 106), lequel signal indique que le type de rouleau doseur utilisé n'est pas approprié aux semences (3).

2. Procédé (100) selon la revendication 1, dans lequel les graines dosées (3a) sont détectées avec le détecteur de graines (8) dans une conduite de semences (6).

3. Procédé (100) selon la revendication 2, dans lequel une accumulation dans le temps et/ou locale des graines (3a) est déterminée dans la conduite de semences (6) et la valeur d'uniformité en est déduite.

4. Procédé (100) selon la revendication 1, dans lequel les graines dosées (3a) sont déposées sur une surface agricole utile (20), de préférence dans un sillon, et le détecteur de graines (9) détecte les graines déposées (3a).

5. Procédé (100) selon la revendication 4, dans lequel une accumulation locale des graines déposées (3a) est déterminée et la valeur d'uniformité en est déduite.

6. Procédé (100) selon l'une quelconque des revendications précédentes, dans lequel les graines (3a) sont détectées optiquement au moyen du détecteur de graines (8, 9).

7. Procédé (100) selon la revendication 6, dans lequel les graines (3a) sont détectées au moyen d'une caméra linéaire ou de surface (9) ou au moyen d'une barrière lumineuse (8).

8. Procédé (100) selon la revendication 6 ou 7, dans lequel une accumulation des graines (3a) est détectée par le biais d'un traitement d'images dans l'unité d'analyse (7).

9. Procédé (100) selon l'une quelconque des revendications 1 à 5, dans lequel des impulsions des graines (3a) sur un transducteur de force, qui est réalisé de préférence sous forme d'élément piézoélectrique, sont détectées avec le détecteur de graines (8).

10. Procédé (100) selon l'une quelconque des revendications précédentes, dans lequel plusieurs types de rouleaux doseurs et à chaque fois des valeurs de consigne associées dépendant du rouleau doseur sont consignés dans une banque de données (7a), et l'unité d'analyse (7) lit, à partir de la banque de données (7a), les valeurs de consigne correspondantes en fonction du type de rouleau doseur installé dans le semoir (1).

11. Semoir à dosage volumétrique (1), comprenant
- un réservoir (2) pour des semences (3),
- un dispositif de dosage (4) qui comprend un boîtier de dosage (42) et un rouleau doseur remplaçable (41) avec plusieurs chambres (41a), afin de recevoir dans les chambres (41a) à chaque fois plusieurs graines (3a) des semences (3) provenant du réservoir (2) et de les soumettre à un dosage volumétrique, et
- avec un dispositif de surveillance pour détecter un type de rouleau doseur non approprié aux semences (3), avec au moins un détecteur de graines (8, 9) et une unité d'analyse (7),
le détecteur de graines (8, 9) étant réalisé pour détecter les graines dosées (3a),
**caractérisé en ce que**
l'unité d'analyse (7) est réalisée pour analyser des signaux du détecteur de graines (8, 9) et pour ainsi déterminer une uniformité du dosage dans le sens d'une accumulation et/ou d'un éclaircissement de graines, et
l'unité d'analyse (7), en cas d'écart de la valeur d'uniformité par rapport à une valeur de consigne, étant prévue pour transmettre un signal avec lequel un type de rouleau doseur non approprié aux semences (3) peut être mis en évidence.

12. Semoir à dosage volumétrique (1) selon la revendication 11, dans lequel le détecteur de graines (8) est raccordé à une conduite de semences (6) afin de détecter les graines dosées (3a) dans la conduite de semences (6).

13. Semoir à dosage volumétrique (1) selon la revendication 12, dans lequel le détecteur de graines (8, 9) est réalisé sous forme de caméra linéaire ou de surface (9), qui est disposée au niveau du semoir agricole (1) de telle sorte qu'elle détecte une région de dépose (A) pour les graines dosées (3a) sur une surface agricole utile (20), afin d'enregistrer sous forme d'images de la caméra les graines (3a) déposées sur ladite surface agricole utile par le semoir (1).

14. Semoir à dosage volumétrique (1) selon l'une quelconque des revendications 11 à 13, dans lequel l'unité d'analyse (7) est connectée à une base de données (7a) dans laquelle sont consignés plusieurs types de rouleaux doseurs et à chaque fois des valeurs de consigne associées dépendant du rouleau doseur.
